Europäisches Patentamt

European Patent Office

Office européen des brevets

(11) Numéro de publication : **0 451 024 B1**

# (12) FASCICULE DE BREVET EUROPEEN

(45) Date de publication du fascicule du brevet :
**10.06.92 Bulletin 92/24**

(51) Int. Cl.$^5$ : **G06K 19/08,** G07F 7/08

(21) Numéro de dépôt : **91400829.7**

(22) Date de dépôt : **27.03.91**

(54) **Carte sécurisée associant un support d'informations à haute densité de stockage et un microcircuit, et son utilisation dansun lecteur de cartes.**

(30) Priorité : **02.04.90 FR 9004175**

(43) Date de publication de la demande :
**09.10.91 Bulletin 91/41**

(45) Mention de la délivrance du brevet :
**10.06.92 Bulletin 92/24**

(84) Etats contractants désignés :
**CH DE ES GB IT LI NL**

(56) Documents cités :
**EP-A- 0 112 461**
**EP-A- 0 138 219**
**EP-A- 0 276 814**
**EP-A- 0 330 404**
**FR-A- 2 214 387**
**US-A- 4 682 794**

(73) Titulaire : **GEMPLUS CARD INTERNATIONAL**
**avenue du Pic de Bertagne, Parc d'activités**
**de la Plaine de Jouques**
**F-13420 Gemenos (FR)**

(72) Inventeur : **Lisimaque, Gilles**
**Cabinet BALLOT-SCHMIT, 7, rue Le Sueur**
**F-75116 Paris (FR)**

(74) Mandataire : **Schmit, Christian Norbert Marie**
**et al**
**Cabinet Ballot-Schmit 7, rue Le Sueur**
**F-75116 Paris (FR)**

Jouve, 18, rue Saint-Denis, 75001 PARIS

## Description

L'invention se rapporte au domaine des cartes supports d'informations haute densité, notamment aux cartes magnétiques et à plus particulièrement pour objet une carte sécurisée associant un support d'informations à haute densité de stockage et un microcircuit.

Il existe aujourd'hui des cartes magnétiques basse et haute densité de stockage, des cartes à lecture optique, ainsi que des cartes à microcircuits intégrés, toutes au format carte de crédit, norme ISO 7810. Chaque technologie a des avantages et des inconvénients.

Ainsi les cartes magnétiques haute densité sont bon marché, pour une densité de stockage importante, et les informations inscrites peuvent être mises à jour, mais elles sont d'accès "lent" et facilement violables.

Les cartes optiques permettent le stockage d'une très grande densité d'informations, mais les informations qu'elles portent ne peuvent pas être mises à jour; elles sont d'accès lent et également peu sécuritaires.

Enfin les cartes à microcircuit ont une capacité de stockage fonction de la taille mémoire disponible.

On connaît également des cartes comportant un microcircuit et une piste magnétique, cartes bancaires par exemple, les lecteurs associés utilisant le microcircuit et/ou les informations stockées sur la piste magnétique dans une même application.

Le problème de ce type de cartes est que le microcircuit peut être désolidarisé de la carte et éventuellement utilisé indépendamment ou en liaison avec une autre carte par un fraudeur. De plus, le microcircuit n'est pas utilisé pour optimiser la gestion de la partie support magnétique.

L'invention a pour objet une carte qui, en associant plusieurs technologies, conduit à un support d'informations à haute densité de stockage facilement lisible qui possède en même temps une plus grande sécurité et éventuellement une vitesse d'accès aux informations augmentée par rapport aux cartes magnétique (et/ou optiques ) sans microcircuit.

Selon l'invention telle que définie par les revendications jointes, la carte sécurisée comportant un support portant sur au moins une partie de sa surface une couche de matériau d'enregistrement, et un microcircuit inséré dans le support est caractérisée en ce qu'un code identificateur, propre à l'association support portant le matériau d'enregistrement et microcircuit, est d'une part mis en mémoire dans une zone inviolable de la mémoire du microcircuit et d'autre part détectable par analyse du support, la validation étant acquise par la correspondance du code lu en mémoire du microcircuit et du code détecté tant que le support et le microcircuit n'ont pas été désolidarisés.

La demande de brevet EP-A-0 112 461 propose un code identificateur mis, d'une part en mémoire dans une zone inviolable de la mémoire du microcircuit de la carte et, d'autre part détectable par analyse du support. Elle implique une notion de comparaison entre une caractéristique mesurable du support et un résultat lu dans cette mémoire (correspondant à une mesure préalable des caractéristiques aléatoires des antennes fixées sur le support). Mais dans ce document, contrairement à la présente invention, les caractéristiques ne relèvent pas de la déformation du support due à l'insertion du microcircuit.

La demande de brevet EP-A-0 276814 propose de vérifier, pour un objet muni d'une couche magnétique, les caractéristiques d'un ensemble d'espaces magnétiques fixés à l'objet, ces caractéristiques variant d'une manière aléatoire. On indique que la détection des caractéristiques magnétiques peut être améliorée en saturant les régions magnétiques examinées. Ceci ne saurait être le cas dans l'invention.

L'invention a également pour objet l'utilisation d'une telle carte sécurisée dans un lecteur de cartes.

L'invention sera mieux comprise et d'autres caractéristiques apparaîtront à l'aide de la description qui suit en référence aux figures annexées.

La figure 1 illustre schématiquement une carte selon l'invention, de dessus et en coupe selon AA';

La figure 2 illustre l'initialisation d'une application utilisant une telle carte;

La figure 3 illustre la mise en oeuvre d'une telle carte pour diminuer le temps d'accès.

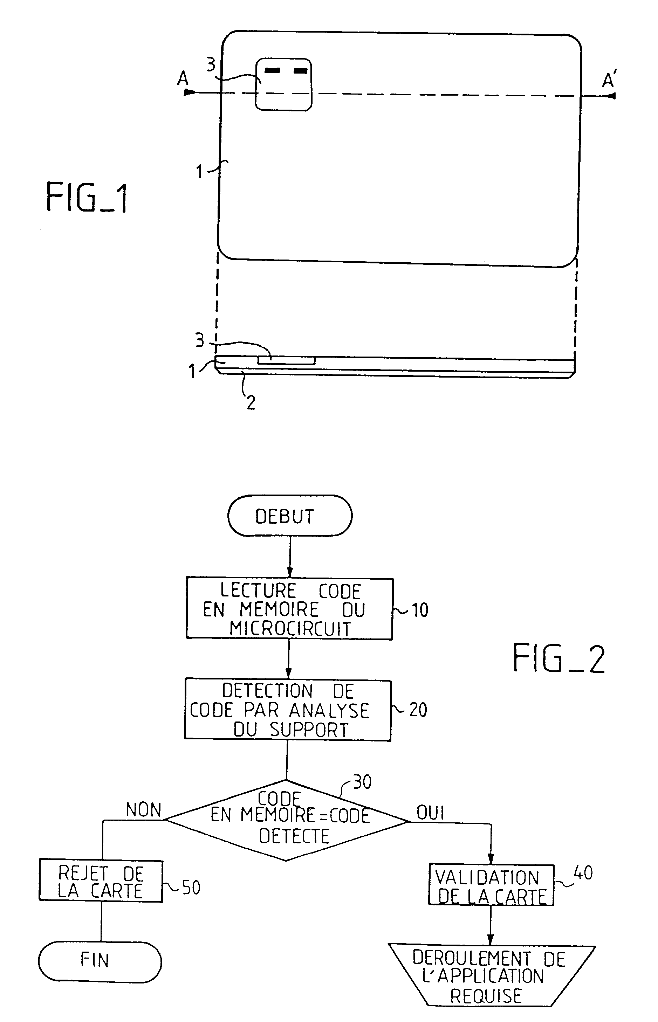

Sur la figure 1 a été représentée une carte comportant un support plastique 1 à la norme ISO 7810, sur lequel est disposée, sur toute la face arrière une couche de matériau magnétique 2 qui en fait un support d'informations à haute densité de stockage. La carte comporte en outre un microcircuit intégré 3, ou "puce", inséré dans le corps plastique de la carte mais disposant de zones de contacts apparentes, sur l'autre face de la carte.

L'insertion du microcircuit dans le support plastique est effectuée par l'une ou l'autre des techniques connues: collage, à froid ou à chaud; fraisage et collage; laminage.. Quelle que soit la technique utilisée, cette insertion du microcircuit dans le support s'accompagne toujours d'une déformation permanente de la structure du support plastique particulière à la carte qui vient d'être réalisée, indépendante de toute contrainte additionnelle temporaire réversible qui pourrait être ultérieurement appliquée à la carte.

Une première caractéristique essentielle de l'invention est d'utiliser cette déformation permanente et définitive pour caractériser la carte, c'est à dire l'association support portant la couche magnétique et microcircuit inséré dans le support. Cette déformation permet d'identifier de façon unique le support dans lequel le microcircuit a été inséré.

Une deuxième caractéristique essentielle de l'invention est le stockage d'un identificateur caractérisant la déformation, sous forme d'un code ou "signature" dans la mémoire sécurisée du microcircuit, c'est à dire dans une zone qui ne peut pas être modifiée et dont l'accès est possible seulement en lecture. Ainsi lors d'une utilisation de la carte, comme illustré par la figure 2,le lecteur commande la lecture du code en mémoire du microcircuit, étape 10, puis, une détection de la signature physique créée par la déformation conduisant à un code détecté par analyse du support, étape 20;et sa comparaison avec le code identificateur, lu en mémoire du microcircuit, étape 30, permet d'assurer, en cas de coïncidence, que le microcircuit n'a pas été désolidarisé de son support initial et cela de façon sûre et simple. La carte est alors validée, étape 40, et l'application utilisant la carte peut alors se dérouler. A l'inverse en cas de non coïncidence la carte est rejetée, étape 50.

La caractérisation la plus simple de la déformation engendrée par l'insertion du microcircuit consiste, si des informations ont été enregistrées au préalable dans la couche magnétique, à détecter les erreurs de lecture générées dans cette couche par la déformation, ou à l'inverse, si le support haute densité n'était pas enregistré, à détecter les erreurs d'écriture générées dans cette couche du fait de la déformation par rapport aux données dont l'inscription a été effectuée, par une lecture du support. Les zones d'erreurs sont alors pointées par un mot d'information particulier, et les informations lues à la suite du pointeur dans ces zones d'erreurs peuvent constituer le code identificateur caractéristique de l'association support/microcircuit.

Il est également possible de mesurer la déformation de la carte par des méthodes plus sophistiquées que celle de la détection d'erreurs de lecture/écriture sur la piste et de stocker cette mesure dans la mémoire du microcircuit. Mais l'utilisation d'une telle mesure pré-enregistrée nécessite, en vue de sa vérification, un dispositif de mesure de même type, sophistiqué, permettant d'effectuer la même mesure physique sur la carte en cours d'utilisation pour permettre la comparaison avec la mesure enregistrée. Ces mesures peuvent être du type mesure de planéité, mesure de réflexion optique du support, mesure de perméabilité. Il est possible d'utiliser ces méthodes, associées à des terminaux ad hoc, pour des cartes à lecture optique, car il n'y a normalement pas d'erreurs de lecture dues à la déformation ou pour des cas particuliers de cartes magnétiques dans lesquels un niveau de vérification élevé est nécessaire. Mais en règle générale, pour les cartes magnétiques on peut se contenter de la détection d'erreurs de lecture.

Une troisième caractéristique, supplémentaire, de l'invention est que le microcircuit intégré, en association avec le support à haute densité de stockage d'informations, peut être utilisé pour diminuer sensiblement le temps d'accès aux informations stockées. En effet, comme indiqué ci-dessus, les supports magnétiques ou optiques haute densité ont un temps d'accès aux informations souvent trop long, quelquefois rédhibitoire pour les applications "temps réel" pour des raisons diverses. Ces raisons qui peuvent être le temps nécessaire au déplacement mécanique des têtes de lecture lorsque toutes les informations précédant l'information utile doivent être lues, la durée de synchronisation, ou l'impossibilité de réécriture sur une zone déjà écrite, l'inscription d'une nouvelle information étant reportée après les informations déjà inscrites, dans une zone non encore utilisée,et donc en fin de piste. Le microcircuit a une capacité de stockage dans sa mémoire, éventuellement assez limitée, mais qui peut être utilisée pour stocker des index, des répertoires ou autres tables utilisables par le système d'accès aux informations portées par la piste. Ainsi la capacité du microcircuit est utilisable pour retrouver très vite, de façon sélective, une information sur la piste à partir d'un critère ou d'une caractéristique, par exemple un nom, un type, un identifiant qui commande instantanément le positionnement de la tête de lecture par exemple. Le système utilisant la carte bénéficie alors d'une grande vitesse d'accès aux informations. En même temps,pour un microcircuit en technologie EEPROM, effaçable et ré-enregistrable, la mémoire peut être remise à jour, ce qui est très utile, les tables étant souvent modifiées.

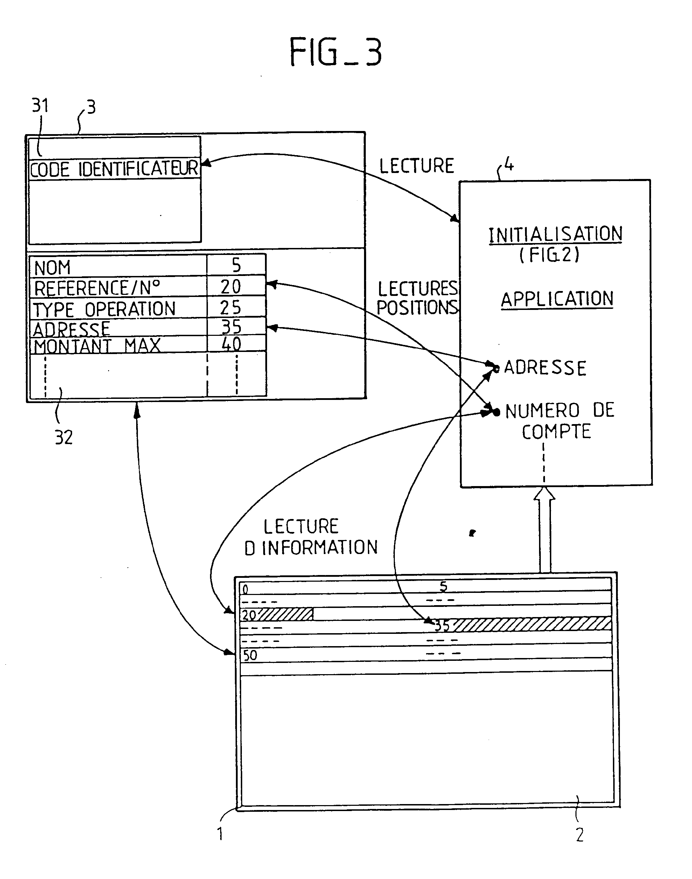

La figure 3 illustre la mise en oeuvre d'une telle carte associant un microcircuit à une piste d'informations haute densité, pour diminuer le temps d'accès aux informations. Pour faciliter la représentation, le microcircuit 3 a été représenté à coté du support portant le matériau d'enregistrement (il est en fait sur l'autre face du même support).

Si le support d'informations est lisible magnétiquement ou optiquement et que les informations qu'il porte sont de N types possibles, le support comporte au moins N champs, le début de chacun de ces champs étant repérable par la position de la tête de lecture qui lui est associée. Par exemple:
– un champ est associé au nom du porteur,
– un champ est associé à une référence, numéro de compte par exemple,
– un champ est associé à un type d'opération,
– un champ est associé à une case adresse,
– un champ est associé à un montant maximum d'opération...

La mémoire du microcircuit comprend en plus de la zone inviolable 31, une zone 32, effaçable et ré-enregistrable où est mise en mémoire avec les noms de champs les numéros de zones correspondant aux débuts des champs, directement liés à des positions associées de la tête de lecture comme représenté sur la figure 3.

Une application utilisant la carte après insertion dans un lecteur 4, et initialisation requiert par exemple d'abord la lecture de l'adresse. Le lecteur commande la lecture du champ correspondant par positionnement de la tête de lecture sur la zone marquée pour ce code dans la table en mémoire dans le microcircuit, soit 35 dans l'exemple représenté, puis si le numéro de compte doit être lu, l'application pourra, immédiatement après lecture en mémoire du microcircuit du numéro de zone correspondant, soit 20, positionner la tête de lecture sur cette zone sans nécessiter un balayage complet de la piste support. Ainsi l'application utilisant la carte a un accès rapide, via les tables en mémoire dans le microcircuit, aux informations enregistrées sur la piste à haute densité de stockage.

Dans une telle configuration, le microcircuit est donc utilisé pour stocker les informations de gestion nécessaires pour obtenir une vitesse optimale pour l'application, les informations de données elles-mêmes étant stockées dans la couche support d'informations à grande densité. Lorsqu'un paramètre est modifié, son écriture à la suite des informations enregistrées préalablement, par exemple en position 50, sera effectuée et la table correspondante dans la mémoire du microcircuit, effaçable et ré-enregistrable, sera mise à jour. L'information, par exemple l'adresse dont la longueur a pu changer sera alors lue instantanément dans la zone correcte par la tête de lecture convenablement positionnée (position 50).

Ainsi la carte obtenue combine les avantages d'un support d'informations à haute densité avec un accès rapide et un moyen de gérer ces informations de manière optimale, évitant par là même le défaut inhérent aux supports seulement optiques et/ou magnétiques qui est la lenteur de l'accès aux informations du fait de la lecture séquentielle des zones.

L'invention n'est pas limitée à la description donnée à titre d'exemple non limitatif qui en a été faite ci-dessus.

Notamment, il a été question ci-dessus d'un support magnétique ou optique à haute densité de stockage. En pratique l'association sécurisée peut mettre en oeuvre un microcircuit inséré dans un support sur lequel peuvent être prévues simultanément une zone à lecture optique et une zone à lecture magnétique, le microcircuit contenant dans sa mémoire inviolable le code identificateur, ou signature, propre à l'association support microcircuit, et dans une zone, éventuellement effaçable et ré-enregistrable des informations de gestion sous forme de tables, de répertoire ou d'index associés à la zone à lecture optique d'une part, et à la zone à lecture magnétique d'autre part.

La carte sécurisée selon l'invention peut également ne comporter qu'une piste magnétique ou optique; dans ce cas la caractéristique essentielle relative à l'établissement, après insertion du microcircuit, d'un code identificateur et sa mise en mémoire dans le microcircuit permet d'assurer la sécurité de la carte. Par contre, la caractéristique supplémentaire relative au stockage des informations de gestion du support peut ne pas être utilisée dans ce cas, dans la mesure où le temps d'accès est suffisant pour les applications envisagées.

## Revendications

1. Carte sécurisée comportant un support (1), portant sur au moins une partie de sa surface une couche de matériau d'enregistrement (2), et un microcircuit (3) inséré dans le support, comportant un code identificateur, propre à l'association support portant le matériau d'enregistrement et microcircuit, d'une part mis en mémoire dans une zone inviolable (31) de la mémoire du microcircuit et d'autre part détectable par analyse du support, la validation étant acquise par la correspondance du code lu en mémoire du microcircuit et du code détecté, tant que le support et le microcircuit n'ont pas été désolidarisés, caractérisé en ce que le code identificateur, propre à l'association support portant le matériau d'enregistrement et microcircuit, caractérise la déformation du support due à l'insertion du microcircuit.

2. Carte selon la revendication 1, caractérisée en ce que pour une carte portant une couche de matériau d'enregistrement magnétique, le code identificateur caractérisant la déformation est établi à partir des erreurs de lecture/écriture générées par la déformation du support.

3. Carte selon la revendication 1, caractérisée en ce que l'information caractérisant la déformation est établie à partir de moyens de mesure de déformation du support.

4. Carte selon l'une quelconque des revendications 1 à 3, caractérisée en ce que la mémoire du microcircuit comprend une zone mémoire (32) initialisée par des informations de gestion associant des données caractéristiques de champs de données à des positions de la tête de lecture, pour un accès sélectif aux données portées par le support par positionnement de la tête de lecture.

5. Carte selon la revendication 4, caractérisée en ce que les informations de gestion sont enregistrées dans une zone mémoire du microcircuit (32) effaçable et ré-enregistrable, et en ce que les données portées par la piste sont mises à jour par inscription dans des zones non encore enregistrées, les informations de gestion correspondantes en mémoire de microcircuit étant mises à jour en conséquence.

6. Carte selon l'une des revendications 1 à 4, caractérisée en ce que le matériau d'enregistrement est un matériau magnétique.

7. Carte selon l'une des revendications 1 à 4, caractérisée en ce que le matériau d'enregistrement est un matériau à lecture optique.

8. Utilisation de la carte selon l'une quelconque des revendications précédentes, associant une telle carte à un lecteur de cartes, caractérisée en ce que le lecteur comporte des moyens de détection du code identificateur propre à l'association support portant la piste et microcircuit, et des moyens de comparaison du code détecté au code mise en mémoire dans la zone inviolable de la mémoire du microcircuit, la carte n'étant utilisable pour l'application demandée qu'en cas de coïncidence.

**Patentansprüche**

1. Fälschungsichere Karte mit einer auf mindestens einem Teil ihrer Oberfläche eine Aufzeichnungsmaterialschicht (2) tragenden Unterlage (1) und mit einer in die Unterlage eingebrachten Mikroschaltung (3), die einen Erkennungscode trägt, der der zugeordneten, die Aufzeichnungsmaterialschicht und die Schaltung tragenden Unterlage eigen ist, und der einerseits in einem geschützten Bereich (31) des Speichers der Mikroschaltung enthalten ist und andererseits durch Untersuchung der Unterlage feststellbar ist, wobei die Absicherung durch die Entsprechung des gelesenen Codes im Speicher der Mikroschaltung der Karte mit dem erfaßten Code erfolgt, vorausgesetzt, daß die Unterlage und die Mikroschaltung nicht relativ zueinander gelockert sind, erfolgt, dadurch gekennzeichnet, daß der Erkennungscode, der der aus Aufzeichnungsschicht und Mikroschaltung bestehenden Zusammenstellung eigen ist, die eine durch einer von der Einbringung der Mikroschaltung herrührende Verformung der Unterlage kennzeichnet.

2. Karte nach Anspruch 1, dadurch gekennzeichnet, daß bei einer eine magnetische Aufzeichnungsschicht tragenden Unterlage der die Verformung kennzeichnende Code auf der Basis von Lese/ Schreibfehlern, die durch die Verformung der Unterlage hervorgerufen werden, beruht.

3. Karte nach Anspruch 1, dadurch gekennzeichnet, daß die die Verformung kennzeichnende Information auf der Basis von die Verformung meßenden Einrichtungen erzeugt wird.

4. Karte nach einem der vorhergehenden Ansprüche 1 bis 3, dadurch gekennzeichnet, daß der Speicher der Mikroschaltung einen Speicherbereich enthält (32), der durch Steuerinformationen initialisiert wird, die charakteristische Daten der Datenfelder den Positionen der Lesekopfes zuordnen, um einen selektiven Zugang zur Unterlage durch Positionierung des Lesekopfes zu ermöglichen.

5. Karte nach Anspruch 4, dadurch gekennzeichnet, daß die Steuerinformation in einem löschbaren und wieder aufnahmefähigen Bereich der Mikroschaltung (32) gespeichert werden, und daß die durch die Spur, getragene Daten durch Schreiben in noch nicht benutzten Bereichen aktualisiert werden, wobei die entsprechenden Steuerinformation im Speicher der Mikroschaltung dadurch aktualisiert werden.

6. Karte nach einem der vorhergehenden Ansprüche 1 bis 4, dadurch gekennzeichnet, daß das Aufzeichnungsmaterial ein magnetisches Material ist.

7. Karte nach einem der vorhergehenden Ansprüche 1 bis 4, dadurch gekennzeichnet, daß das Aufzeichnungsmaterial ein optisch zu lesendes Material ist.

8. Verwendung einer Karte nach einem der vorhergehenden Ansprüche mit Zuordnung einer solchen Karte zu einem Kartenleser, dadurch gekennzeichnet, daß der Kartenleser Einrichtungen zum Erfassen des Erkennungscodes, der der Zuordnung der die Spur tragenden Unterlage mit der Mikroschaltung eigen ist und Einrichtungen zum Vergleichen des erfaßten Codes mit dem in dem geschützten Bereich der Mikroschaltung gespeicherten Code umfaßt, wobei die Karte nur im Falle einer Entsprechung für den vorgesehenen Zweck verwendbar ist.

**Claims**

1. Security card comprising a support (1) being over at least a part of its area a layer of recording material (2), and a micro-circuit (3) inserted in the support, comprising an identifying code suitable for the association between the support bearing the recording material and the micro-circuit, stored in an inviolable zone (31) of the micro-circuit memory and also detectable by the analysis of the support, the evaluation being obtained by the correspondence between the code read as stored in the micro-circuit and the code detected, as long as the support and the micro-circuit have not been separated, characterized in that the appropriate identifying code for the association between the support bearing the recording material and the micro-circuit characterizes the deformation undergone by the support as a result of the insertion of the micro-circuit.

2. Card according to Claim 2, characterized in that, for a card bearing a layer of magnetic recording material, the identifying code characterizing the deformation is established from reading/writing errors generated by the deformation of the support.

3. Card according to Claim 1, characterized in that the information characterizing the deformation is established from support deformation measuring means.

4. Card according to any one of Claims 1-3, characterized in that the memory of the micro-circuit comprises a memory zone (32) initialized by control informations associating characteristic data of data fields with positions of the reading head, for a selective access to the data borne by the support by positioning the reading head.

5. Card according to Claim 4, characterized in that the control informations are recorded in a memory zone of the micro-circuit (32) which is erasable and re-recodable and that the data borne by the track are updated by entering it in the zones not yet recorded, the corresponding control information in the memory of the micro-circuit being updated in consequence.

6. Card according to any one of Claims 1-4, characterized in that the recording material is a magnetic material.

7. Card according to any one of Claims 1-4, characterized in that the recording material is an optical reading material.

8. Use of the card according to any one of the preceding claims, associating a card of this kind with a card reader, characterized in that the reader comprises means for the detection of the appropriate identifying code for the association between the support bearing the track and the micro-circuit, and means for comparing the detected code with the code stored in the inviolable zone of the memory of the microcircuit, the card not being usable for the application required except in the event of coincidence.

FIG_1

3

A ————————————————————————————— A'

1

3

1

2

DEBUT

LECTURE CODE
EN MEMOIRE DU
MICROCIRCUIT  ~10

FIG_2

DETECTION DE
CODE PAR ANALYSE  ~20
DU SUPPORT

30

NON ← CODE
EN MEMOIRE = CODE → OUI
DETECTE

REJET DE
LA CARTE  ~50

VALIDATION  ~40
DE LA CARTE

FIN

DEROULEMENT DE
L'APPLICATION
REQUISE

# FIG_3